# EUROPEAN PATENT APPLICATION

(11) **EP 4 501 748 A1**
(43) Date of publication of application: **05.02.2025**
(21) Application number: 23777815.4
(22) Date of filing: 13.03.2023
(51) Int. Cl.: B62D 21/00, B60L 50/60, B60K 1/04

(54) **VEHICLE CHASSIS STRUCTURE AND VEHICLE**

(30) Priority: 31.03.2022 CN 202210344746
(71) Applicant: Great Wall Motor Company Limited, Hebei 071000 (CN)
(72) Inventor: CHEN, Qiang, Baoding, Hebei 071000 (CN); HE, Zhijie, Baoding, Hebei 071000 (CN); ZHANG, Tao, Baoding, Hebei 071000 (CN); ZHANG, Shuren, Baoding, Hebei 071000 (CN); WU, Wenbo, Baoding, Hebei 071000 (CN); ZHOU, Rongqing, Baoding, Hebei 071000 (CN); GUO, Guiyang, Baoding, Hebei 071000 (CN); CHEN, Xi, Baoding, Hebei 071000 (CN)
(74) Representative: Klunker IP Patentanwälte PartG mbB
(86) International application number: PCT/CN2023/081103
(87) International publication number: WO 2023/185438

(57) **Abstract**

A vehicle chassis structure and a vehicle, the vehicle chassis structure includes: a battery pack housing, integrated with a vehicle body and located in a middle of the vehicle body, and a front sub-frame (191) and a rear sub-frame (192), respectively connected to a front end and a rear end of the battery pack housing; the battery pack housing is provided with a frame (1) arranged in a ring shape, and a front floor panel (15) connected to an inner side of the frame (1); the frame (1) and the front floor panel (15) define a battery module installation space (16); a front end and a rear end of the frame (1) are respectively connected to connection members (18); the front sub-frame (191) and the rear sub-frame (192) are both connected to the frame (1) through the connection members (18) at the corresponding end. The vehicle chassis structure of the present application is conducive to simplifying the assembly structure below the middle of the vehicle body by constructing the vehicle chassis in the form of an integrated battery pack housing; the arranging of the connection members is convenient for connecting and installing the front sub-frame and the rear sub-frame on the battery pack housing, which is conducive to the connection and assembly of the vehicle main structure.

## Description

The present application claims priority to a patent application entitled "Vehicle chassis structure and vehicle" filed on March 31, 2022 to CNIPA, with application No. 202210344746.9, and the entire contents of which are incorporated herein by reference.

### TECHNICAL FIELD

The present application relates to the technical field of vehicle body structures, and more particularly to a vehicle chassis structure. In addition, the present application also relates to a vehicle.

### BACKGROUND

With the development and popularization of new energy vehicles, the power battery technology of new energy vehicles has also made significant progress. The battery pack of a new energy vehicle is generally located at the bottom of the middle portion of the vehicle, below the front floor. The battery pack is generally equipped with a bottom tray for carrying the modules and other components in the battery pack, and the battery pack is fixed to the bottom frame of the vehicle as a whole through the bottom tray.

The middle structure of the vehicle body, especially the frame structure near the battery pack, not only bears the weight of the battery pack, but also protects the battery pack; it is also an important supporting structure of the vehicle, which needs to bear the main weight of the vehicle body, and also needs to have anti-collision strength to reduce the risk of collision from the side of the vehicle.

The existing middle frame structure of the vehicle body is relatively complex, including door sill beams, a front floor, a battery pack housing, a door sill reinforcing beam, a seat cross beam, etc. The assembly process is complicated, which is not conducive to improving the assembly efficiency of the whole vehicle. Moreover, in order to reduce the overall weight of the battery pack, the existing battery pack housing needs to strictly control the thickness of the shell, resulting in insufficient protection strength of the battery pack housing and poor heat insulation effect, which is not conducive to the control of the working temperature inside the battery pack.

Moreover, due to the complex assembly structure under the middle of the vehicle body, which is assembled from a plurality of components such as door sill beams, a front floor, a battery pack housing, and a door sill reinforcing beam, etc., the sound insulation performance of the bottom of the body is reduced, which is not conducive to improving the use experience of the vehicle.

In addition, in the existing vehicle body structure design, the middle housing structure and the front panel cross beam, the front cabin longitudinal beam, the rear vehicle body structure, and the sub-frame, etc. are often connected and assembled through a plurality of connection members. There are many assembly connection members involved, and the assembly process is relatively complicated, which results in a large amount of work required in the assembly process.

### SUMMARY

In view of this, an object of the present application is to provide a vehicle chassis structure to facilitate the connection and assembly between the sub-frame and the battery pack structure in the middle of the vehicle.

To achieve the above-mentioned object, the technical solution disclosed in the present invention is implemented as follows:
A vehicle chassis structure, which includes: a battery pack housing, integrated with a vehicle body and located in a middle of the vehicle body, and a front sub-frame and a rear sub-frame, respectively connected to a front end and a rear end of the battery pack housing; the battery pack housing is provided with a frame arranged in a ring shape, and a front floor panel connected to an inner side of the frame; the frame and the front floor panel define a battery module installation space; a front end and a rear end of the frame are respectively connected to connection members; the front sub-frame and the rear sub-frame are both connected to the frame through the connection members at the corresponding end.

Further, the battery module installation space is located below the front floor panel, and the front floor panel is provided with a middle channel arranged along a length direction of the vehicle body, and two ends of the middle channel are respectively connected to the front end and the rear end of the frame.

Further, the middle channel is provided with a through hole arranged along a length direction of the middle channel for a wire harness and/or a pipeline to pass through; and/or, the front floor panel is arranged lower than a top of the frame, and tops of the front end and the rear end of the frame are both provided with grooves, and the two ends of the middle channel are respectively fixed in the corresponding groove.

Further, the front floor panel is provided with a seat installation crossbeam, and the seat installation crossbeam is connected to the frame and the middle channel respectively.

Further, at least one of the frame, the middle channel and the seat installation crossbeam is made of an aluminum profile.

Further, the frame is provided with a hollow inner cavity, and the inner cavity is filled with a heat insulation and sound insulation material; and/or a top of the front floor panel is paved with a heat transfer material.

Further, the frame is provided with straight section portions arranged on two sides of the frame, and the straight section portions extend along a length direction of the vehicle body, and the straight section portions on two sides of the frame are configured to constitute sill beams in the vehicle body.

Further, a top of the front end of the frame is provided with a reinforcing beam, the reinforcing beam is arranged along a width direction of the vehicle body, and the reinforcing beam is configured to be arranged corresponding to a tail end of a front cabin longitudinal beam in the vehicle body, so as to form a barrier to a movement of the front cabin longitudinal beam toward a rear of the vehicle.

Further, the front end and the rear end of the frame both have a straight line portion extending along the width direction of the vehicle body, and inclined portions respectively connected to two sides of the straight line portion, and each of the inclined portions is arranged outwardly in a direction away from the straight line portion; and the reinforcing beam includes a middle beam body connected to a top of the straight line portion at the front end, and end beam bodies respectively connected to a top of each of the inclined portions at the front end.

Further, a top of the end beam body is a inclined surface that is gradually lowered in a direction away from the middle beam body.

Further, the middle beam body is made of an aluminum profile, and a cavity is provided inside the middle beam body; and/or, a through hole is provided on the middle beam body and is arranged along the length direction of the vehicle body.

Further, two connection members at each end are arranged close to two sides of the frame, and each connection member is provided with a body connection portion configured for fixing to a front structure or a rear structure in the body, and a sub-frame connection portion configured for connecting to the front sub-frame or the rear sub-frame.

Further, the connection member is detachably connected to the frame; and/or, at least one of the sub-frame connection portion and the body connection portion adopts a installation sleeve provided in the connection member.

Further, the connection member is cast from an aluminum alloy, and a plurality of weight-reducing cavities are formed in the connection member, and a reinforcing rib is provided in each of the plurality of weight-reducing cavities.

Compared with the prior art, the present application has the following advantages:
the vehicle chassis structure of the present application is conducive to simplifying the assembly structure below the middle of the vehicle body by constructing the vehicle chassis in the form of an integrated battery pack housing; the connection members are arranged between the frame of the battery pack housing and the sub-frame, so that the front sub-frame and the rear sub-frame can be conveniently connected and installed on the battery pack housing, which is conducive to the integrated design of the connection structure and facilitates to the connection and assembly of the vehicle main structure.

In addition, the middle channel is arranged in the length direction of the vehicle body, which can improve the longitudinal supporting strength of the vehicle body structure; and through holes are arranged inside the middle channel for the layout of wire harnesses, pipelines, etc.; the arrangement of the wire harness and the pipeline structures on the vehicle body can be reduced, and the wire harness and the pipeline have a good protective effect, thereby facilitating the improvement of the layout conditions of the the wire harness and the pipeline between the front and rear of the vehicle.

Another object of the present application is to propose a vehicle. The vehicle is provided with the vehicle chassis structure described in the present application.

Compared with the prior art, the vehicle of the present application has the technical advantages possessed by the above-mentioned vehicle chassis structure.

### BRIEF DESCRIPTION OF THE DRAWINGS

The drawings constituting a part of the present application are used to provide a further understanding of the present application, and the schematic embodiments of the present application and the description thereof are used to explain the present application, and the directional words such as front and back, up and down involved therein are only used to indicate the relative positional relationship, and do not constitute an improper limitation on the present application. In the accompanying drawings:
FIG. 1 is a perspective schematic diagram of a vehicle chassis structure provided in Embodiment 1 of the present application;
FIG. 2 is a perspective schematic diagram of a battery pack housing structure provided in Embodiment 1 of the present application;
FIG. 3 is a perspective schematic diagram of the component shown in FIG. 2 from a bottom view;
FIG. 4 is a cross-sectional schematic diagram of a portion shown by A-A in FIG. 2;
FIG. 5 is a perspective schematic diagram of a middle channel provided in Embodiment 1 of the present application;
FIG. 6 is a top view of a reinforcing beam provided in Embodiment 1 of the present application;
FIG. 7 is a cross-sectional schematic diagram of a portion shown by B-B in FIG. 6;
FIG. 8 is a schematic diagram of an overall structure of a vehicle chassis structure provided in Embodiment 1 of the present application in a vehicle body assembly structure;
FIG. 9 is a perspective schematic diagram of each component shown in FIG. 1 after removing the front structure and the rear structure of the vehicle body;
FIG. 10 is a perspective schematic diagram of a connection member provided in Embodiment 1 of the present application;
FIG. 11 is a perspective schematic diagram of the connection member provided in Embodiment 1 of the present application from a bottom view of the front side; and
FIG. 12 is a perspective schematic diagram of a connection member provided in Embodiment 1 of the present application from a top view of the rear side.

Description of reference numerals:
1-frame; 100-partition plate; 101-sub-cavity; 12-straight section portion; 13-groove; 130-straight line portion; 131-inclined portion;
14-reinforcing beam; 140-middle beam body; 141-end beam body; 142-through hole; 143-inclined surface; 144-cavity;
15-front floor panel; 16-battery module installation space; 17-seat installation crossbeam;
18-connection member; 180-sub-frame connection portion; 181-body connection portion; 182-installation sleeve; 183-weight-reducing cavity; 184-reinforcing rib; 185-inner side portion; 186-outer side portion; 187, connecting bolt;
191-front sub-frame; 192-rear sub-frame; 193-front structure; 194-rear structure;
3-middle channel; and 300-via hole.

### DETAILED DESCRIPTION OF EMBODIMENTS

It is noted that, where there is no conflict, the embodiments and features within the embodiments of the present application can be combined with each other.

In the description of the present application, it should be noted that if there are terms indicating orientation or positional relationship such as "upper", "lower", "inner", "back", etc., they are based on the orientation or positional relationship shown in the drawings, and are only for the convenience of describing the present application and simplifying the description, rather than indicating or implying that the device or element referred to must have a specific orientation, be constructed and operated in a specific orientation, and therefore cannot be understood as a limitation of the present application.

In addition, in the description of the present application, unless otherwise clearly defined, the terms "installation", "connected", "connection", and "connection member" should be understood in a broad sense. For example, the connection can be a fixed connection, a detachable connection, or an integral connection; it can be a mechanical connection or an electrical connection; it can be a direct connection, or it can be indirectly connected through an intermediate medium, or it can be a connection between two components. For ordinary technicians in the field, the specific meanings of the above terms in the present application can be understood in combination with specific circumstances. the present application will be described in detail with reference to the drawings and in combination with the embodiments below.

### Embodiment 1

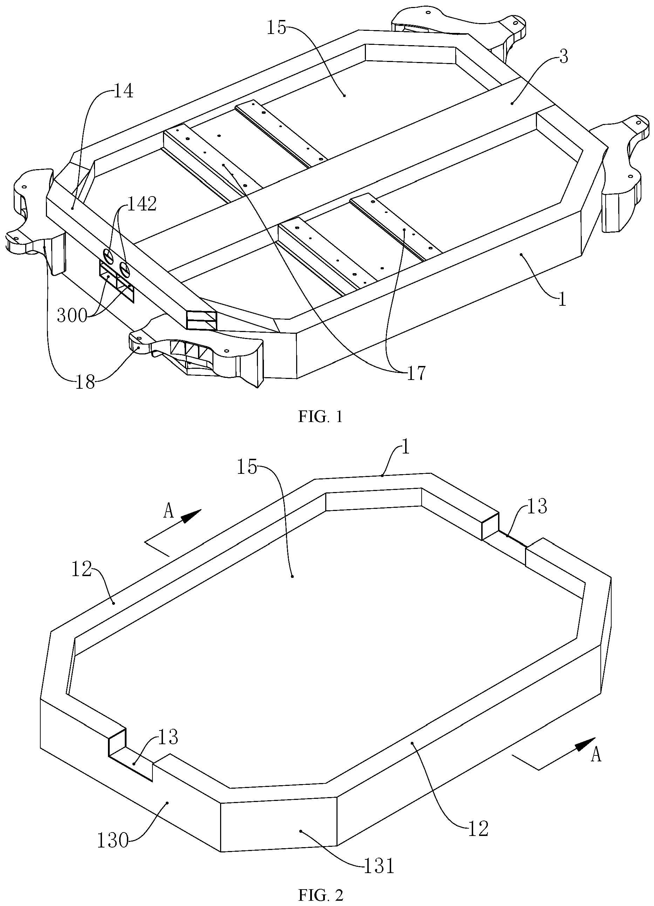

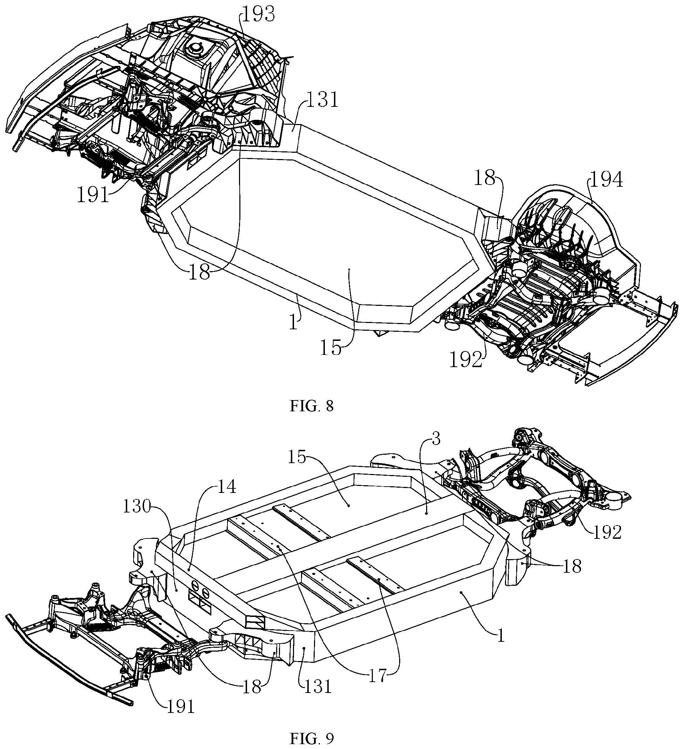

The present embodiment relates to a vehicle chassis structure to facilitate the connection and assembly between the sub-frame and the battery pack structure in the middle of the vehicle, and an exemplary structure thereof is shown in FIGS. 1 and 8.

In general, the vehicle chassis structure includes a battery pack housing located in the middle of the vehicle body and integrated with the vehicle body, and a front sub-frame 191 and a rear sub-frame 192 respectively connected to the front end and the rear end of the battery pack housing. The battery pack housing is provided with a frame 1 arranged in a ring shape, and a front floor panel 15 connected to the inner side of the frame 1, and the frame 1 and the front floor panel 15 define a battery module installation space 16. Moreover, the front end and the rear end of the frame 1 are respectively connected to the connection members 18, and the front sub-frame 191 and the rear sub-frame 192 are connected to the frame 1 through the connection members 18 at the corresponding end (the front end or the rear end).

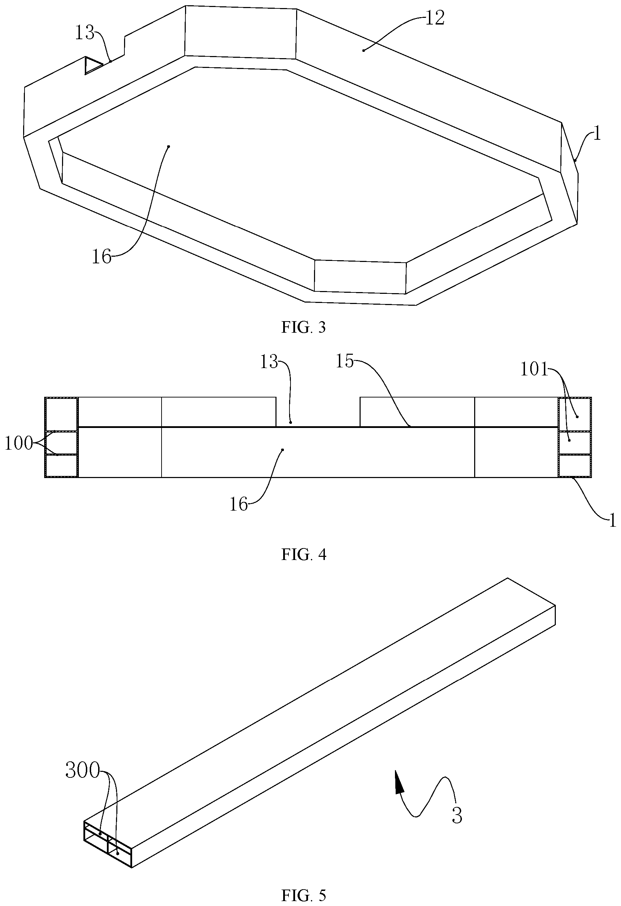

Based on the above overall design, combined with FIGS. 2 and 3, for the vehicle chassis structure of the present embodiment, as a preferred implementation, the frame 1 is preferably made of an aluminum profile, and the frame 1 can be, for example, an integrally extruded aluminum profile. The use of the aluminum profile is convenient for processing and manufacturing. Moreover, as shown in FIG. 4, an inner cavity is also provided in the frame 1, and the frame 1 made of the aluminum profile is also convenient for the providing of the inner cavity in the frame 1, which not only makes the battery pack housing structure integrated with the vehicle body as the battery pack housing having lightweight characteristics, but also improves the protective performance of the frame 1 as the battery pack housing.

Based on the providing of the inner cavity in the frame 1, a number of partition plates 100 can also be added to the inner cavity to divide the inner cavity into a plurality of sub-cavities 101, and as a preferred implementation, each sub-cavity 101 can be filled with heat insulation and sound insulation materials. By providing a plurality of partition plates 100 in the inner cavity, the inner cavity is divided into a plurality of sub-cavities 101, which has a good effect on improving the overall strength of the frame 1. When the frame 1 is used as the main body frame of the vehicle body, the frame 1 can have good supporting performance and the ability to withstand impact from the side of the vehicle, which is conducive to improving the impact resistance and buffering performance of the frame 1.

The addition of heat insulation and sound insulation materials can further improve the heat insulation and heat preservation properties of the frame 1 when the frame 1is used as the battery pack housing. Since the inner cavity is a fully enclosed structure, in order to facilitate the addition of heat insulation and sound insulation materials, the heat insulation and sound insulation materials are preferably polyurethane foam materials. In this way, a filling hole can be arranged on the frame 1, and the polyurethane foam material can be filled into the inner cavity for easy operation and implementation. After the filling is completed, the filling hole is blocked.

It should be pointed out that the annular arrangement of the frame 1 does not mean that the frame 1 is annular as a whole, but that the frame 1 is a full circle structure. It can be a rectangle or a polygon with chamfered corners. The structural shape can be flexibly adjusted according to the setting requirements of the middle frame of the vehicle body. The cross-sectional size and wall thickness of the frame 1 can be arranged in principle so that the frame 1 has sufficient vehicle body supporting strength.

In the present embodiment, the frame 1 is provided with straight section portions 12 arranged on two sides of the frame 1, the straight section portions 12 extend along the length direction of the vehicle body, and the straight section portions 12 on two sides of the frame 1 constitute the threshold beams in the vehicle body. The two sides of the frame 1 are partially arranged to be straight and used as the threshold beams of the vehicle body, which can simplify the overall frame structure below the middle of the vehicle body and beneficial for streamlining the assembly process of the vehicle.

In addition, the providing of the front floor panel 15 inside the frame 1 separates the driving cabin and the battery module installation space 16, which is not only used as the front floor of the vehicle body, but also used as the upper housing of the battery pack, which has a good effect on the simplification of components of the vehicle and the simplification of the assembly process of the vehicle.

As shown in FIGS. 1, 2 and 5, in the present embodiment, the vehicle body is provided with a middle channel 3 arranged along the length direction of the vehicle body, and the two ends of the middle channel 3 are respectively connected to the front end and the rear end of the frame 1. Such a design is not only conducive to enhancing the overall strength of the frame 1, but also beneficial for increasing the overall strength of the vehicle body frame; when the vehicle is hit from the front and rear, the design can provide a certain protective effect on both the driving cabin and the battery pack.

In addition, during the specific implementation, the embodiment can be provided with grooves 13 at the tops of the front end and the rear end of the frame 1, and the two ends of the middle channel 3 are respectively fixed in the corresponding groove 13. By providing two grooves 13 at the front end and the rear end of the frame 1, the connection strength between the frame 1 and the middle channel 3 can be improved, and the middle channel 3 will not protrude above the middle channel 3, which is convenient for the arrangement of the driving cabin above the middle channel 3.

The above-mentioned middle channel 3 is preferably made of the aluminum profile, which has the advantages of lightweight and easy extrusion molding. Moreover, a via hole 300 can be provided in the middle channel 3 to facilitate the arrangement of the wire harness and the pipeline of the vehicle.

In addition, in the width direction of the vehicle body, the embodiment is also provided with a seat installation crossbeam 17 arranged along the width direction of the vehicle body, and the seat installation crossbeam 17 is respectively connected to the two sides of the middle channel 3, and can also be fixed to the front floor panel 15. By providing the seat installation crossbeam 17, which can not only be convenient to install the vehicle seat, but also, due to the connection between the seat installation crossbeam 17 and the two sides of the middle channel 3, the overall structural strength of the middle of the vehicle body can be effectively improved.

As shown in FIG. 1, as a preferred implementation, the present embodiment provides a reinforcing beam 14 at the top of the front end of the frame 1, the reinforcing beam 14 is arranged along the width direction of the vehicle body, and the reinforcing beam 14 is configured to correspond to the rear end of the front cabin longitudinal beam at the front of the vehicle body, so as to form a barrier to the movement of the front cabin longitudinal beam toward the rear direction of the vehicle.

By providing the reinforcing beam 14, which can not only improve the supporting strength of the front of the frame 1, but also, in the overall vehicle body, the cabin longitudinal beam is generally slightly higher than the height of the frame 1. The providing of the reinforcing beam 14 can make the reinforcing beam 14 at the same height as the cabin longitudinal beam, which can keep the force transmission from the cabin longitudinal beam to the middle structure of the vehicle smooth, and can reduce the risk of the cabin longitudinal beam being lifted up when the cabin longitudinal beam is higher than the battery pack structure.

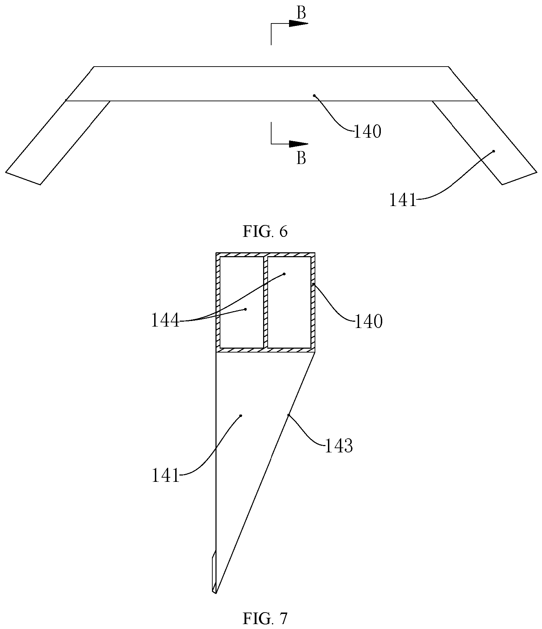

Combined with FIGS. 6 and 7, in the present embodiment, the front end of the frame 1 is provided with a straight line portion 130 extending along the width direction of the vehicle body, and inclined portions 131 respectively connected to two sides of the straight line portion 130. Each inclined portion 131 is arranged outward in a direction pointing to the rear of the vehicle; accordingly, the reinforcing beam 14 includes a middle beam body 140 connected to the top of the straight line portion 130, and an end beam body 141 respectively connected to the top of each inclined portion 131. The providing of the inclined portions 131 can effectively avoid components such as wheels and fender linings. Based on the shape arranging of the front end of the frame 1, the reinforcing beam 14 is designed as a middle beam body 140 located in the middle and end beam bodies 141 at both ends, so as to be connected to the tops of the straight line portion 130 and the inclined portion 131 respectively, which can improve the matching degree and integral connection strength of the reinforcing beam 14 and the frame 1.

The middle beam body 140 of the present embodiment is preferably made of the aluminum profile; at the same time, as shown in FIG. 1, a through hole 142 arranged along the length direction of the vehicle body can also be arranged on the middle beam body 140 to facilitate the installation of the wire harness and the pipeline. As shown in FIG. 7, a cavity 144 can also be arranged inside the middle beam body 140 to reduce the weight of the reinforcing beam 14. In addition, the middle beam body 140 is made of the aluminum profile, which is also easy to extrusion and has sufficient strength.

In addition, in the present embodiment, the top of the end beam body 141 is also a inclined surface 143 that is gradually lowered in the direction away from the middle beam body 140. The top of the end beam body 141 is designed as a gradually lowered inclined surface 143, which can be connected to the top of the frame 1 as a whole, thereby the overall shape regularity of the reinforcing beam 14 and the frame 1 can be improved, and which facilitates the installation and arrangement of adjacent components such as body sheet metal members.

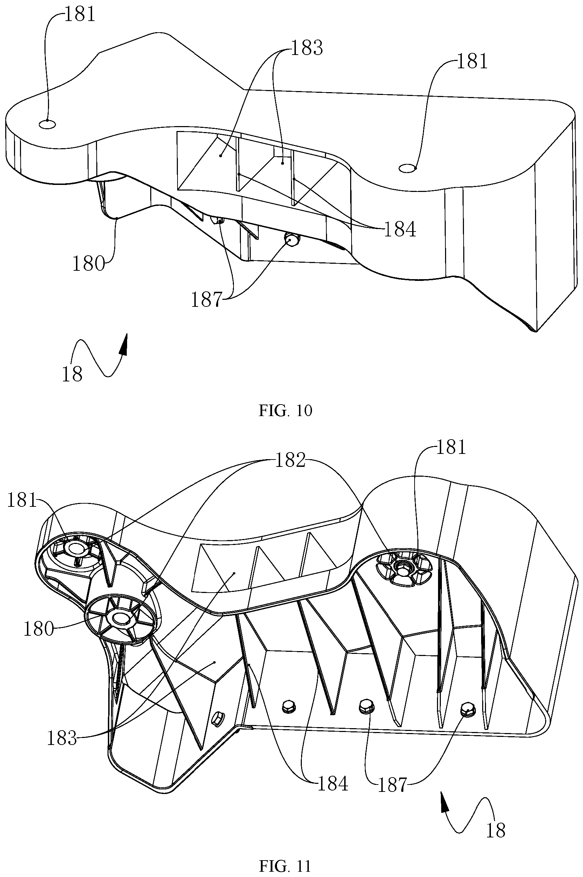

In order to facilitate the connection between the vehicle chassis structure and the front and rear structures of the vehicle body of the present embodiment, in the present embodiment, as shown in FIGS. 8 and 9 in combination with FIGS. 10 to 12, the front end and the rear end of the frame 1 are respectively connected with connection members 18, and two connection members 18 are arranged at each end are arranged close to two sides of the frame 1; moreover, each connection member 18 is provided with a sub-frame connection portion 180 for fixing to the sub-frame, and a body connection portion 181 for fixing to the front structure 193 or the rear structure 194 in the vehicle body.

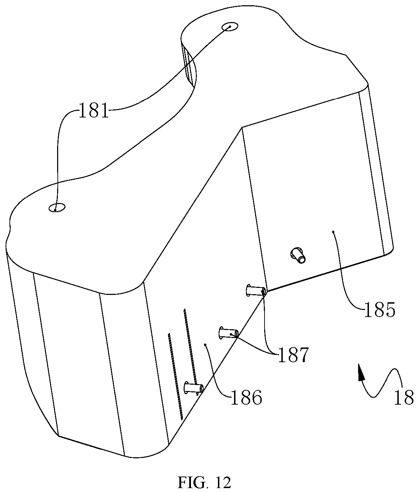

The connection members 18 can be fixed to the frame 1 as the battery pack housing by welding, riveting, etc. In combination with FIG. 12, the preferred method of the present embodiment can also be adopted, and the connection members 18 and the battery pack housing are fixedly connected by a connecting bolt 187. Moreover, when connected, the inner side portion 185 of the connection member 18 abuts against the straight line portion 130 of the frame 1, and the outer side portion 186 abuts against the inclined portion 131 of the frame 1. A detachable connection method such as screw connection is adopted between the connection members 18 and the battery pack housing, so that the connection members 18 can be detachably connected to the battery pack housing, which is convenient for the separate processing and manufacturing of each component and the replacement and assembly of damaged components.

As shown in FIGS. 10 to 12, two body connection portion 181 are provided on the connection member 18 for connecting with the front structure 193 or the rear structure 194, and at the same time, a sub-frame connection portion 180 is also provided for connecting with the front sub-frame 191 or the rear sub-frame 192. The installation sleeve 182 provided in the connection member 18 can be used at the sub-frame connection portion 180 and/or the body connection portion 181, and the corresponding components can be connected with bolts.

The connection between the connection member 18 and the sub-frame and the front and rear structures of the vehicle body is connected by installing the installation sleeve 182 at the sub-frame connection portion 180 and the vehicle body connection portion 181, which is conducive to improving the connection strength and reliability.

In the present embodiment, the connection members 18 can be made of forged steel, cast iron, aluminum alloy, etc. Preferably, the connection members 18 of the present embodiment are cast by the aluminum alloy. The use of cast aluminum parts is easy to process and manufacture, which is conducive to the lightweight design of the vehicle structure.

In addition, based on the use of cast aluminum parts, several weight-reducing cavities 183 are formed in the connection members 18, and a reinforcing rib 184 is provided in each of the weight-reducing cavities 183. The weight-reducing cavities 183 and the reinforcing ribs 184 are provided in the connection members 18, and the weight of the connection members 18 and the manufacturing cost can be effectively reduced while ensuring sufficient connection strength of the connection members 18.

In the present embodiment, the connection members 18 are provided between the middle portion and the front and rear portions of the vehicle body, and the connection members 18 are fixed to the battery pack housing integrated with the vehicle body. The sub-frame connection portion 180 and the vehicle body connection portion 181 on the connection members 18 are respectively connected to the sub-frame and the front and rear structures of the vehicle body, so that a plurality of vehicle body structural components can be integrally connected on the connection member 18, which is conducive to the integrated design of the connection structure and the connection and assembly of the vehicle body structure.

The vehicle chassis structure of the present embodiment is conducive to simplifying the assembly structure below the middle of the vehicle body by constructing the vehicle chassis into the form of an integrated battery pack housing. At the same time, the connection members 18 are provided between the frame 1 of the battery pack housing and the sub-frame, which can conveniently connect and install the front sub-frame 191 and the rear sub-frame 192 on the battery pack housing, such that the chassis structure can form a solid integrated structure, which is conducive to improving the reliability of the chassis.

### Embodiment 2

The embodiment of the present application relates to a vehicle, which has the vehicle chassis structure provided in Embodiment 1.

Moreover, the vehicle of the embodiment of the present application defines a battery module installation space 16 by the frame 1 and the front floor panel 15, so that the frame 1 is used as a side housing of the battery pack while serving as a vehicle body frame structure, which is conducive to simplifying the assembly structure below the middle of the vehicle body. At the same time, the frame 1 is connected to the middle channel 3, the front floor panel 15, the connection member 18 and other components, which can also improve the overall strength of the middle of the vehicle body structure and facilitate assembly with the front and rear structures of the vehicle body.

In addition, it should be emphasized that the frame 1 adopts an extruded aluminum profile structure and is annular to form a force transmission ring structure, which can improve the overall structural strength of the frame 1. At the same time, the frame 1 of the embodiment of the present application is integrally extruded. Due to the higher strength of integral extrusion molding compared to existing split splicing methods, it can also greatly increase the structural strength of the frame 1.

At the same time, combined with the arrangement of the horizontal and vertical interlaced middle channel 3 and the seat installation crossbeam 17, the embodiment of the present application can also form a force transmission channel in the battery pack housing. Therefore, through the force transmission network composed of the annular frame and the middle channel 3 and the seat installation crossbeam 17 inside the annular frame, when the vehicle collides, on the one hand, the aluminum profile structure characteristics can be used to absorb the collision force, and on the other hand, the collision force, especially the side collision force, can be effectively dispersed and transmitted, thereby the collision safety of the middle of the vehicle body can be improved.

By using the inclined portions at two ends of the frame 1 and the tapered structure pointing to the front or rear of the vehicle, the embodiment of the present application can also facilitate the transmission of the collision force from the front or rear of the vehicle body to the sill beams on two sides. In this way, combined with the arrangement of the middle channel 3, the deformation of the middle position of the vehicle body, that is, the driving cabin, during the collision can be reduced to improve the collision safety.

In the embodiment of the present application, by providing the heat insulation material in the frame 1, the heat of the battery pack can be prevented from being dissipated, and by using the front floor panel 15 of an alloy material with good heat transfer performance, the heat of the battery pack can be transferred to the driving cabin through the front floor panel 15 when the vehicle is used in cold seasons. In this way, the battery pack located at the bottom of the driving cabin can form a structure similar to floor heating to improve the ambient temperature in the vehicle, and it can also reduce the energy consumption of air conditioning heating, which is conducive to reducing the energy consumption of the whole vehicle.

In addition, based on the concave arrangement of the top of the battery pack housing, the embodiment of the present application can also provide a material with good heat transfer on the front floor panel 15 to better transfer the heat of the battery pack to the driving cabin. At this time, the heat transfer material can be, for example, a graphene material, and specifically, an existing graphene plate can be used, and further a carpet can be laid on the heat transfer material.

The above description is only a preferred embodiment of the present application and is not intended to limit the present application. Any modification, equivalent replacement, improvement, etc. made within the spirit and principle of the present application shall be included in the protection scope of the present application.

## Claims

1. A vehicle chassis structure, **characterized in that**, comprising:
a battery pack housing, integrated with a vehicle body and located in a middle of the vehicle body, and
a front sub-frame (191) and a rear sub-frame (192), respectively connected to a front end and a rear end of the battery pack housing;
wherein the battery pack housing is provided with a frame (1) arranged in a ring shape, and a front floor panel (15) connected to an inner side of the frame (1); the frame (1) and the front floor panel (15) define a battery module installation space (16); a front end and a rear end of the frame (1) are respectively connected to connection members (18); the front sub-frame (191) and the rear sub-frame (192) are both connected to the frame (1) through the connection members (18) at the corresponding end.

2. The vehicle chassis structure according to claim 1, **characterized in that**:
the battery module installation space (16) is located below the front floor panel (15), and the front floor panel (15) is provided with a middle channel (3) arranged along a length direction of the vehicle body, and two ends of the middle channel (3) are respectively connected to the front end and the rear end of the frame (1).

3. The vehicle chassis structure according to claim 2, **characterized in that**:
the middle channel (3) is provided with a through hole (300) arranged along a length direction of the middle channel (3) for a wire harness and/or a pipeline to pass through; and/or, the front floor panel (15) is arranged lower than a top of the frame (1), and tops of the front end and the rear end of the frame (1) are both provided with grooves (13), and the two ends of the middle channel (3) are respectively fixed in the corresponding groove (13).

4. The vehicle chassis structure according to claim 2, **characterized in that**:
the front floor panel (15) is provided with a seat installation crossbeam (17), and the seat installation crossbeam (17) is connected to the frame (1) and the middle channel (3) respectively.

5. The vehicle chassis structure according to claim 4, **characterized in that**:
at least one of the frame (1), the middle channel (3) and the seat installation crossbeam (17) is made of an aluminum profile.

6. The vehicle chassis structure according to claim 1, **characterized in that**:
the frame (1) is provided with a hollow inner cavity, and the inner cavity is filled with a heat insulation and sound insulation material; and/or a top of the front floor panel (15) is paved with a heat transfer material.

7. The vehicle chassis structure according to claim 1, **characterized in that**:
the frame (1) is provided with straight section portions (12) arranged on two sides of the frame (1), and the straight section portions (12) extend along a length direction of the vehicle body, and the straight section portions (12) on two sides of the frame (1) are configured to constitute sill beams in the vehicle body.

8. The vehicle chassis structure according to claim 1, **characterized in that**:
a top of the front end of the frame (1) is provided with a reinforcing beam (14), the reinforcing beam (14) is arranged along a width direction of the vehicle body, and the reinforcing beam (14) is configured to be arranged corresponding to a tail end of a front cabin longitudinal beam in the vehicle body, so as to form a barrier to a movement of the front cabin longitudinal beam toward a rear of the vehicle.

9. The vehicle chassis structure according to claim 8, **characterized in that**:
the front end and the rear end of the frame (1) both have a straight line portion (130) extending along the width direction of the vehicle body, and inclined portions (131) respectively connected to two sides of the straight line portion (130), and each of the inclined portions (131) is arranged outwardly in a direction away from the straight line portion (130); and
the reinforcing beam (14) comprises a middle beam body (140) connected to a top of the straight line portion (130) at the front end, and end beam bodies (141) respectively connected to a top of each of the inclined portions (131) at the front end.

10. The vehicle chassis structure according to claim 9, **characterized in that**:
a top of the end beam body (141) is a inclined surface (143) that is gradually lowered in a direction away from the middle beam body (140).

11. The vehicle chassis structure according to claim 9, **characterized in that**:
the middle beam body (140) is made of an aluminum profile, and a cavity (144) is provided inside the middle beam body (140); and/or, a through hole (142) is provided on the middle beam body (140) and is arranged along the length direction of the vehicle body.

12. The vehicle chassis structure according to any one of claims 1 to 11, **characterized in that**:
two connection members (18) at each end are arranged close to two sides of the frame (1), and each connection member (18) is provided with a body connection portion (181) configured for fixing to a front structure (193) or a rear structure (194) in the body, and a sub-frame connection portion (180) configured for connecting to the front sub-frame (191) or the rear sub-frame (192).

13. The vehicle chassis structure according to claim 12, **characterized in that**:
the connection member (18) is detachably connected to the frame (1); and/or, at least one of the sub-frame connection portion (180) and the body connection portion (181) adopts a installation sleeve (182) provided in the connection member (18).

14. The vehicle chassis structure according to claim 12, **characterized in that**:
the connection member (18) is cast from an aluminum alloy, and a plurality of weight-reducing cavities (183) are formed in the connection member (18), and a reinforcing rib (184) is provided in each of the plurality of weight-reducing cavities (183).

15. A vehicle, **characterized in that**:
the vehicle is provided with the vehicle chassis structure according to any one of claims 1 to 14.
